# EUROPEAN PATENT SPECIFICATION

(11) **EP 1 942 697 B1**
(45) Date of publication and mention of the grant of the patent: **04.01.2012**
(21) Application number: 08154551.9
(22) Date of filing: 17.02.2006
(51) Int. Cl.: H04W 36/08

(54) **Providing inner-cell registration of access terminal in a radio communication system**
Bereitstellen der Innerzellen-Registrierung eines Zugangsendgeräts in einem Funkkommunikationssystem
Appareil et procédé associé pour la fourniture d'un enregistrement à l'intérieur de la cellule d'un terminal d'accès dans un système de communication radio

(43) Date of publication of application: 09.07.2008
(62) Divisional of application: 06250866.8
(73) Proprietor: RESEARCH IN MOTION LIMITED, Waterloo, Ontario N2L 3W8 (CA)
(72) Inventor: Willey, William Daniel, San Francisco, CA 94109 (US)
(74) Representative: Fennell, Gareth Charles

(56) References cited:
- WO-A-00/28768
- US-A- 5 930 710
- US-A- 6 119 007
- US-A1- 2005 048 972
- 3GPP2 CDMA200 TSG-C: "Spatial Hysteresis at Subnet Boundaries for Subnet Idle Handoffs; C25-20051205-003" 3RD GENERATION PARTNERSHIP PROJECT "3GPP2", 5 December 2005 (2005-12-05), pages 1-5, XP002391651
- 3RD GENERATION PARTNERSHIP PROJECT 2 "3GPP2": "cdma200 High Rate Packet Data Air Interface Specification" 3GPP2 C.S0024-A VERSION 2.0, July 2005 (2005-07), XP002482279

## Description

The present invention relates generally to a manner by which an access terminal requests registration with a network part of a radio communication system. More particularly, the present invention relates to apparatus, and an associated method, by which to permit the access terminal to register with the network part when the access terminal is positioned in a desired proximity to a network station of the network part.

Registration does not occur immediately upon entry of the access terminal into a cell, at the cell's edge, but rather is delayed until the access terminal moves into the desired proximity with a network station of the network part. Registration signals are able to be generated at reduced power levels when the access terminal is positioned in proximity with the network station, lessening interference with other signals generated during operation of the radio communication system.

### Background of the Invention

Communication by way of a mobile communication system is increasingly pervasive throughout modem society. A mobile communication system is typically constructed to be operable in conformity with operating protocols set forth in an operating specification. Successive generations of mobile communication systems, each operable in conformity with operating protocols of an associated operating specification, have been developed and deployed. Subscribers typically communicate through use of an access terminal, i.e., a mobile station, a radio transceiver that communicates with an access network, i.e., a communication network or infrastructure. Newer generations of cellular communication systems, in general, take advantage of advancements in communication technologies and provide various improvements over their prior-generation counterparts. For instance, a CDMA (Code-Division, Multiple-Access) system, referred to as CDMA2000^{™} EVDOis a successor to a prior-generation CDMA system, referred to as CDMA2000^{™} 1x. The CDMA2000^{™} EVDO system is permitting of EVDO (Evolution Data Optimized) data communication services, a high speed data communication service.

A cellular communication system, such as the aforementioned CDMA2000^{™} communication system, includes an access network that includes a plurality of base stations, each defining a coverage area sometimes referred to as a cell. An access terminal generally communicates with the base station in whose coverage area that the access terminal is positioned. If the terminal travels to be positioned, successively, within the coverage areas of different cells, hand-off procedures are performed to provide for communication of the access terminal with different ones of the base stations. Generally, a registration procedure is performed to register the terminal with the base station in whose coverage area that the access terminal is newly positioned.

Registration is sometimes performed when the access terminal enters a new coverage area, such as by crossing a boundary between a first coverage area and a second coverage area, such as a subnet. In the aforementioned EVDO system, a problem that sometimes occurs is a so-called "ping-pong" effect in which the access terminal repeatedly attempts to register with the access network portions of the separate coverage areas. Such repeated registration is signaling-consumptive, and places the access terminal at risk of missing data communicated thereto. Proposals have been set forth to alleviate the problem associated with the ping-pong effect. One manner proposed by which to reduce the occurrence of the ping-pong effect is set forth in 3GPP2 contribution number C25-20051130-001. Procedures set forth therein provide a registration method, in which the access terminal generates a UATI request, for an EVDO communication system. Color codes are associated with subnets. A base station defining a cell at a border between subnets broadcasts the color code associated with that cell as well as also one or more secondary color codes. When an access terminal is paged in one subnet, the terminal is also paged on some cells of its bordering subnet, i.e., some border cells. The secondary color codes of those border cells are set to the same color code as the primary color code of the subnet. The access terminal keeps track of the last registered color code. When the access terminal performs an idle hand-off to a cell that includes the last color code as either a primary or secondary color code, the terminal does not perform registration.

Generally, when the access terminal moves beyond a border cell to a cell that does not broadcast a secondary color code and the primary color code of that cell is not the last registered color code, the terminal registers its presence in the cell by sending a UATI request. By paging on border cells and transmitting the secondary color codes, the ping-pong effect at the boundary of the subnets is avoided.

Conventionally, when the access terminal enters into a new celt, the terminal registers with the base station soon after the mobile station enters the cell. That is to say, the access terminal informs the base station of the new position of the access terminal when the terminal is positioned at the edge of the cell. A registration message is sent, for instance, after an idle hand-off is performed to the base station of the cell into whose coverage area that the access terminal has entered. Registration of the access terminal when the terminal is positioned at the edge of the cell, however, requires that the registration message be sent at a relatively high power level. The need to transmit the message at the high power level is disadvantageous for various reasons. Transmission of the message at the high power level increases the possibility that the signal shall interfere with other ongoing communications, increases the energy consumption of the access terminal, and, particularly in a CDMA-type system, results in a system capacity degradation. United States published patent application document of number US 2005/048972 A1' and published document number WO 00/028768 disclose, for instance, handover and hand-off procedures.

[0007A] United States Patent Application Publication No. US 2005/0048972 A1 discloses a system, wireless device and method for determining that a wireless device is detecting a triggering event. The triggering event includes detecting a WLAN border cell, detecting a first signal from an egress portal, or detecting a degradation in signal quality. The wireless device then detects at least one signal from an egress portal, determines that the wireless device is moving from the coverage area of a first communications system to the coverage area of a second communications system according to the order of signals received from the egress portal, initiates a registration sequence with the second wireless communication system in response to determining that the wireless device is moving from the coverage area of the first communications system to the coverage area of the second communications system, and conducts present and subsequent calls via the second wireless communication system.

[0007B] International Patent Publication No. WO 00/28768 discloses a methods for selecting a target cell for hand-off in a radiocommunication system. The method uses mobile station location, direction, and speed information to determine the likelihood of the mobile station arriving at a border of the target cell. The system reserves a channel in the target cell for hand-off when the likelihood of the mobile station arriving at the target cell reaches some predetermined value.

While a manner by which to prevent the occurrence of the ping-pong effect is required, an ongoing need remains also to provide a manner to permit registration of the access terminal when the terminal is positioned in closer proximity to the base station rather than when the access terminal is positioned at the edge of the cell defined by the base station.

It is in light of this background information related to registration of an access terminal in a radio communication system that the significant improvements of the present invention have evolved.

[0009A] The present invention is as set out in the claims.

### Brief Description of the Drawings

Figure 1 illustrates a functional block diagram of a multi-subnet, multi-cell radio communication system in which an embodiment of the present invention is operable.

Figure 2 illustrates a functional block diagram of an access terminal and a base station of an access network that form part of a radio communication system of an embodiment of the present invention.

Figure 3 illustrates a message sequence diagram representative of exemplary operation of the access terminal and base station shown in Figure 2.

Figure 4 illustrates a method flow diagram representative of the method of operation of an embodiment of the present invention.

### Detailed Description

The present invention, accordingly, advantageously provides apparatus, and an associated method, by which an access terminal requests registration with a network part of a radio communication system.

Through operation of an embodiment of the present invention, a manner is provided by which to permit the access terminal to register with the network part when the access terminal is positioned in a desired proximity to a network station of the network part. Registration does not occur immediately upon entry of the access terminal into a cell, at the cell's edge, but rather, the registration is delayed until the access terminal moves into a desired proximity with a network station of the network part.

By positioning the access terminal in the desired proximity with the base station prior to registration, signaling generated pursuant to registration, such as generation of the registration message by the access terminal, is generated at reduced power levels relative to when the signaling occurs when the access terminal is positioned at a cell edge. The reduced power levels lessen the occurrence of interference with other communications in the cell, thereby avoiding resultant communication degradation, as well as reducing the energy consumption at the access terminal. Reduced energy consumption permits lengthier usage periods of operation of the access terminal between battery replacement or recharging.

In one aspect of an example useful in understanding the present invention, the base station generates a configuration message that is broadcast throughout its cellular coverage area for detection by access terminals positioned within the coverage area. The configuration message includes an indication when the base station supports inner-cell registration operation. When the base station supports inner-cell registration operation, the registration message, which otherwise would be sent by an access terminal upon its entry into the cell at the cell edge is instead delayed until the access terminal is positioned in closer proximity with the base station. The configuration message further identifies a value of a signal threshold to be used by the access terminal in the determination of when the access terminal generates and sends the registration message. The value of the selected threshold forms, for instance, a pilot signal strength level. A registration message is generated by the access terminal only if the pilot signal monitored by the access terminal exhibits a signal strength in excess of the identified value.

The configuration message, for instance, includes primary and secondary color codes, or other identifiers associated with base stations. A primary color code identifies, for instance, the location area or subnet of the base station from which the configuration message is broadcast, and a secondary color code identifies the location area or subnet of the base station in proximity to the base station from which the configuration message is broadcast. The secondary color code, if included in the configuration message, identifies, e.g., the location area or subnet of which the base station forms a portion of the cell adjacent to the cell defined by the base station that broadcasts the configuration message.

In another aspect of an example useful in understanding the present invention, the access terminal includes a detector that detects the contents of the configuration message, once received at the access terminal. The detector detects whether the configuration message includes an inner-cell enablement indication. If the configuration message includes the inner-cell enablement indication, the access terminal operates to delay its registration when the access terminal enters into the coverage area of a base station until additional criteria is met. That is to say, the access terminal does not immediately register at the cell-edge, but rather delays registration until the additional criteria is attained. When the configuration message further includes values of a selected threshold, the selected threshold defining the additional criteria, the detector further accesses the value of the selected threshold. The value of the selected threshold is used in the determination of whether the access terminal shall commence registration procedures.

In another aspect of an example useful in understanding the present invention, the access terminal includes a comparator that compares measured values with the value of the selected threshold. The comparator provides an indication of when the measured value is at least as large, or good, as the selected threshold value. When the selected threshold value defines a pilot signal strength level, the indication provided by the comparator indicates at least when the measured value of the pilot signal strength is as great as, or greater than, the threshold value.

In another aspect of an example useful in understanding the present invention, the access terminal includes a registration message generator that operates to generate a registration message. When the configuration message includes the indication that the base station from which the configuration message is broadcast is inner-cell enablement capable, the registration message is generated when selected criteria is met. Only upon determination that the selected criteria is met does the registration message generator permit the registration message to be sent. When the selected criteria define proximity of the access terminal to a base station, generation and transmission of the registration message is delayed until the access terminal is within proximity to the base station. The registration message therefore need not be sent immediately upon entry of the access terminal into a cell, at the edge of the cell.

In these and other aspects, therefore, apparatus, and an associated method, is provided for selectably requesting registration of an access terminal. A configuration message detector is adapted to detect reception at the access terminal of a configuration message that is broadcast thereto. The configuration message selectably includes an inner-cell enablement indication. A registration message generator is configured to generate a registration message when the configuration message includes the inner-cell enablement indication and a network signal received at the access terminal is beyond a selected threshold.

In these and other aspects, therefore, additional apparatus, and associated methodology, is further provided for a network station. A configuration message generator is configured to generate a configuration message that selectably includes an inner-cell enablement indication. The inner-cell enablement indication is indicative of when a registration with the network station is permitted.

[0023a] The present invention is as set out in the independent claims.

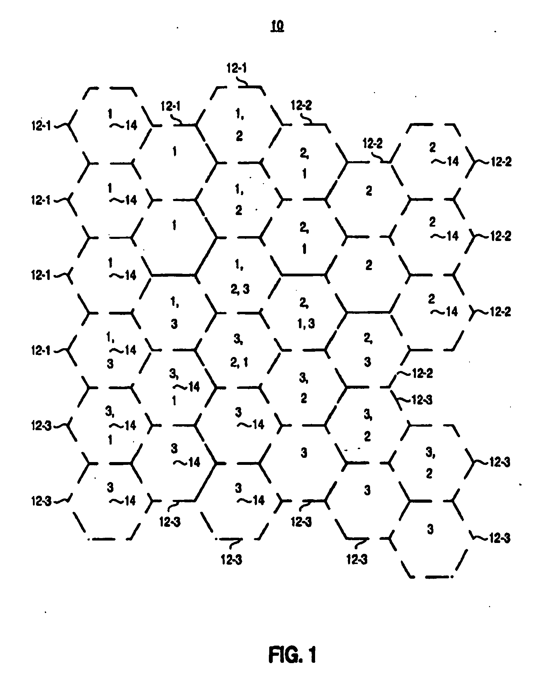

Referring first to Figure 1, portions of a radio communication system, shown generally at 10, are shown. The radio communication system is formed of a plurality of cells 12. Each cell 12 is defined by a coverage area of a base station 14 that, for purposes of illustration, is represented at the center of each of the cells. In the exemplary communication system, the radio communication system forms a CDMA2000^{™} EVDO-compliant communication system that provides for data communication services. The operating protocols of such a system are set forth, e.g., in a 3GPP2 C.S0024, release A or B. More generally, the radio communication system is representative of any radio communication system that utilizes a plurality of network stations that define coverage areas and are permitting of communications with an access terminal within the coverage area of the associated network station.

The illustrated portion of the radio communication system shows three separate subnets, and each of the cells 12 forms part of one of the subnets. The cells identified as 12-1 form part of the first subnet, the cells identified as 12-2 form part of the second subnet, and the cells identified as 12-3 form part of the third subnet. Base stations 14 associated with each of the cells broadcast primary color codes as part of quick configuration messages, or otherwise identify themselves in control messages broadcast by the respective base stations. Certain of the base stations 14, in broadcasts of their respective quick configure messages, also broadcast secondary color codes that identify other base stations. The base stations that broadcast secondary color codes are here located at the subnet boundaries.

The base stations of cells 12-1 of the first subnet transmit primary color codes designated by "1" in Figure 1. The base stations of cells 12-2 of the second subnet broadcast primary color codes designated by "2" in Figure 1. And, the base stations of cells 12-3 of the third subnet broadcast primary color codes designated by "3" in Figure 1. A base station that broadcasts, in addition to its primary color code, a secondary color code, also designated by a "1", "2", or "3", as appropriate, following the identifier that identifies transmission of the primary color code. For instance, the cells 12-1 of the first subnet that border with the second subnet identified with the digits "1, 2" to indicate transmission of the primary color code "1" and a secondary color code "2". Cells 12-1 positioned on the border with the third subnet are identified with "1" and "3", that is, "1, 3", to identify broadcasts of the primary color code "1" and secondary color code "3". And, one of the cells 12-1 broadcasts the primary color code "1" and two secondary color codes, secondary color code "2" and secondary color code "3", that is, "1,2, 3", due to its bordering of cells in both the second subnet and the third subnet. Others of the cells 12 analogously identify broadcasts of their respective primary color codes and, if appropriate, also secondary color codes. Each subnet has an associated paging area. When an access terminal is registered in a subnet, it will be paged in the associated paging area. The paging area for a subnet includes all of the base stations in the subnet. In addition, it includes border cells in other adjacent subnets. The border cells in other subnets are those cells that are broadcasting the same secondary color code as the primary color code of the subnet. Thus an access terminal can be paged in the cells of the subnet where it is registered and in border cells that are in other subnets.

When an access terminal is positioned in a cell 12 defined by a base station 14, the access terminal monitors broadcasts of signals by the base stations. In the exemplary implementation, the base stations broadcast quick configuration messages (Quick Config) that include a primary color code, if appropriate, one or more secondary color codes, an indication whether the base station supports inner-cell enablement, and if so, a selected threshold value. The quick configuration message is used to indicate a change in the contents of an overhead message and to provide information that is of a frequently-changing type. The access terminal utilizes the information contained in the message to determine when to send a registration message to the base station to register therewith. When a border cell base station is inner-cell enabled, the registration does not occur at the cell-edge, as soon as the access terminal detects its presence in the cell, but, rather, the registration message is sent only when the additional criteria, i.e., the selected threshold value, is at least attained. When the selected threshold value corresponds to a power level of the pilot signal also broadcast by the base station, the registration message generation is delayed until the access terminal is within a desired proximity to the base station, thereby permitting the registration message to be sent at a lowered power level. If an access terminal reaches a non-border cell of a subnet other than the subnet in which it last registered without having already performing an inner-cell registration at a border cell, it will be required to register as soon as it performs the idle handoff to the non-border cell even though it is at the cell edge; otherwise, the access terminal could not be paged.

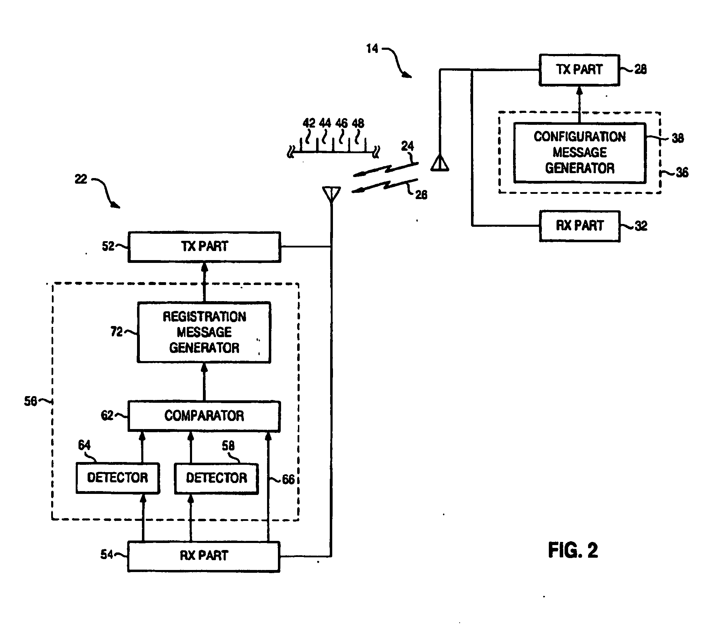

Figure 2 illustrates a representation of a base station 14 and an access terminal 22 operable in a radio communication system, such as that shown in Figure 1, and operable pursuant to an embodiment of the present invention. The access terminal 22 is positioned within communication range of the base station 14, capable thereby to receive the quick configuration messages, here represented by the segment 24 and the pilot signals, here represented by the segments 26 broadcast by the base station.

The base station includes, in conventional manner, transceiver circuitry, here formed of a transmit part 28 and a receive part 32. The transmit part operates to transmit signals generated at, or provided to, the base station. And, the receive part 32 operates to receive signals transmitted to the base station. Signals transmitted by the base station are sometimes referred to as forward link signals and signals sent to the base station by the access terminal by way of a radio air interface are sometimes referred to as reverse link signals.

The base station 14 also includes apparatus 36 of an embodiment of the present invention. The apparatus is functionally represented, implementable in any desired manner, including algorithms executable by processing circuitry, hardware devices, or combinations thereof. The apparatus 36 of the exemplary implementation includes a configuration message generator 38. The message generator generates the quick configuration message that is broadcast by the base station during its regular operation. Figure 2 further illustrates portions of the configuration message 24, shown to include a plurality of fields, including a field 42 populated with values defining a primary color code, a field 44 populated with values defining a secondary color code, a field 46 populated with a value to indicate whether the base station is inner-cell enablement capable, and a field 48 populated with values of a selected threshold, here values representative of a minimum pilot signal strength. The values populating the fields of the configuration message are changeable, as needed. For instance, in the event of a system reconfiguration, and change of the elements of the subnets of the communication system, the identities of the color codes, and changes to the values of the selected threshold are easily made at the base station and, once made, broadcast therefrom.

The access terminal 22 also includes transceiver circuitry, here represented by a transmit part 52 and a receive part 54. The transmit and receive parts are operable in conventional manner to transmit signals originated at the access terminal and receive signals communicated thereto, respectively. The access terminal also includes apparatus 56 of an embodiment of the present invention. The apparatus 56 is also functionally represented, implementable in any desired manner, including by algorithms executable by processing circuitry, hardware devices, or combinations thereof.

The apparatus 56 includes a configuration message detector coupled to the receive part 54 for detecting values contained in the configuration message. The detector 58 is representative of an element that detects the indication of the inner-cell enablement bit selectably populating the field 46. When the detector detects the presence of the bit, an indication of the detection is provided to a comparator 62.

The apparatus further includes a detector 64, here representative of an element that detects the values forming the selected threshold populating the field 48 of the configuration message. The detector 64 is also coupled to the receive part 54 that receives the broadcast message.

The comparator operates to compare measured values, here provided by way of the line 66, with the threshold value provided by the detector 64 when the detector 58 detects the inner-cell enablement bit. The comparator compares the values and provides an indication when the measured value exceeds the threshold value.

The indication formed by the comparator is provided to a registration message generator 72. The registration message generator generates a registration message that, in the exemplary implementation, forms a UATI Request, and that is provided to the transmit part 52 for transmission therefrom. The registration message is generated to register the access terminal with the subnet of which the base station forms a portion. A registration message is generated in conventional manner except when the access terminal crosses a border between subnets and the access terminal is positioned in a border cell of the new subnet. The access terminal determines its position in a border cell through analysis of primary color codes and secondary color codes, if any, broadcast by a base station in whose coverage area that the access terminal is positioned. When so-positioned, the registration message is generated only if the comparison made by the comparator 62 indicates that the measured value provided on the line 66 exceeds the selected threshold level identified in the field 48 of the configuration message sent to the access terminal. Thereby, the registration message is generated only if the threshold criteria has been achieved. When the selected threshold identifies a minimum pilot signal strength level, the registration message is not generated until the access terminal detects a pilot signal 26 broadcast by the base station that is, when detected at the access terminal, of a power level at least as great as the threshold level. The registration message need not be generated immediately upon entry of the access terminal into the cell defined by the base station of the access network, but rather is generated only when the access terminal approaches the base station, in proximity thereto, as defined by the power level of the pilot signal being in excess of the threshold value.

When the communication stations 14 and 22 are operable in general conformity with the CDMA2000^{™} /EVDO operating protocols, the quick configuration message, in one implementation, is formatted to include the following fields of the following lengths as follows:

| **Field** | **Length (bits)** |
|---|---|
| MessageID | 8 |
| ColorCode | 8 |
| SectorID24 | 24 |
| SectorSignature | 16 |
| AccessSignature | 16 |
| Redirect | 1 |
| RPCCount63To0 | 6 |

| RPCCount63To0 occurrences of the following field | |
|---|---|
| ForwardTrafficValid63To0 | 1 |
| | |
| RPCCount127To64Included | 0 or 1 |
| RPCCount127To64 | 0 or 6 |
| RPCCount127To64 occurrences of the following field: | |
| ForwardTrafficValid 127To64 | 0 or 1 |
| | |
| SecondaryColorCodeIncluded | 1 |
| InnerCellUATIRequestEnabled | 1 |
| InnerCellUATIRequestPilotThresh | 6 |
| SecondaryColorCodeCount | 0 or 3 |

| SecondaryColorCodeCount occurrences of the following field: | |
|---|---|
| SecondaryColorCode | 0 or 8 |
| | |
| Reserved | 0 - 7 (as needed) |

Wherein:
- MessageID: A value set by the access network to 0x00.
- ColorCode: A value set by the access network to the color code corresponding to this sector as the primary color code.
- SectorID24: A value set by the access network to the least significant 24 bits of the SectorID value corresponding to the sector.
- SectorSignature: A value set by access network to the value of the SectorSignature field of the next SectorParameters message that shall be transmitted.
- AccessSignature: A value set by the access network to the value of the AccessSignature parameter from the AccessParameters message that is Public Data of the Access Channel MAC Protocol.
- Redirect: A value that indicates access network redirect. The access network shall set this field to '1' if it is redirecting all access terminals away from the access network.
- RPCCount63To0: A value set by the access network to the maximum number of RPC channels supported by the sector corresponding to Forward Traffic Channels associated with MAC indices 0 through 63.
- ForwardTrafficValid63To0: A value set by the access network such that occurrence *n* of this field is set to '1' if the Forward Traffic Channel associated with MACIndex 64-*n* is valid. The access terminal uses this field to perform supervision of the Forward Traffic Channel.
- RPCCount127To64Included: If this field is included, the access network sets the value of the field to '1' if the RPCCount127To64 field is included in this message. Otherwise, the field is set to a value of '0'.
- RPCCount127To64: If the RPCCount127To64Included field is omitted, or if RPCCount127To64Included is '0', this field is omitted. Otherwise, the access network sets this field to the maximum number of RPC channels supported by the sector corresponding to Forward Traffic Channels associated with MAC indices 64 through 127, inclusive.
- ForwardTrafficValid127To64: If the RPCCount127To64Included field is omitted, or if RPCCount127To64Included is '0', this field is omitted. Otherwise, the access network shall set occurrence *n* of this field to `1' if the Forward Traffic Channel associated with MACIndex 128-*n* is valid. The access terminal uses this field to perform supervision of the Forward Traffic Channel.
- InnerCellUATIRequestEnabled: If SecondaryColorCodeIncluded is set to '1', the access network shall set this field to indicate whether inner cell UATI Requests are supported. If this field is set to '1', the AT is to enable inner cell UATI Requests; otherwise, the AT is to disable inner cell UATI Requests. If SecondaryColorCodeIncluded is set to '0', the access network shall omit this field.
- InnerCellUATIRequestPilotThresh: If InnerCellUATIRequestEnahled is included and is set to '1', the access network shall set this field to indicate the pilot strength above which the access terminal is to initiate inner cell UATI Requests. The access network shall set this field to the inner cell UATI Request pilot strength threshold, expressed as an unsigned binary number equal to [-2 x 10 x log10 Ec/I₀]. The value used by the access terminal is -0.5 dB times the value of this field. The access terminal shall support all the valid values specified by this field. If either SecondaryColorCodelncluded or InnerCellUATIRequestEnabled is set to '0', the access network shall omit this field.
- SecondaryColorCodeIncluded: The values of this field are set by the access network to be '1' if the SecondaryColorCodeCount field is included. Otherwise, the value of this field is set to '0'.
- SecondaryColorCodeCount: If SecondaryColorCodeIncluded is set to '1', the access network sets this field to indicate the number of secondary color codes covering this sector.
If this field is set to '000', the access terminal is to consider all possible values for ColorCode other than the primary color code to be included in the set of secondary color codes. If SecondaryColorCodeIncluded is set to '0', this field is omitted.
- SecondaryColorCode: If SecondaryColorCodeCount is included and is set to a value greater than '000', this field is set by the access network to values of a color code that is to be considered to be a member of the secondary color code set.
Otherwise, this field is omitted.
- Reserved: The number of bits in this field is equal to the number needed to make the message length an integer number of octets. The access network shall set this field to zero. The access terminal ignores this field.

In a further embodiment of the present invention, additional requirements are set forth that must be met prior to generation of the registration message by the access terminal. For instance, in one implementation, the access terminal 22 sets an old registration message, an OLD UATI to a new value UATI and sends a UATI request message if four conditions are met. First, the result of a bitwise logical and operation of the UATI and its subnet mask specified by a UATI sub-net mask is different from the result of a bitwise logical AND operation of a sector ID and its subnet mask by a subnet mask (where the sector ID and the subnet mask correspond to a sector in an active set), i.e., the AT is in a different subnet than the one in which it last registered; the UATI color code currently held at the access terminal matches any secondary color codes in the configuration, e.g., quick configuration message, i.e. the AT has determined that it is at a border cell of the different subnet; an inner-cell UATI request enabled, i.e., the value populating the field 46, in the configuration message is set to a logical 1 value, or otherwise indicates that the base station is inner-cell enabled; the pilot signal strength of the active set pilot signal is greater than the inner-cell UATI request pilot threshold, i.e., the value populating the field 48; and successive pilot strength measurements of the active set pilot signal shows that the pilot signal strength is decreasing. That is to say, the access terminal is moving into closest proximity to the base station and just starts to move away therefrom. There are other possible methods the AT could use for determining if it is at a border cell of a different subnet than checking to see if the UATI color code currently held at the AT matches any secondary color codes in the configuration. For example, the AT could check to see if it is in a different subnet than its last registered subnet and if there are any secondary color codes in the configuration; if both are true then the AT could determine that it is in a border cell. Similarly, the AT could check to see if its last registered color code is different from the primary color code in the configuration and check to see if there are any secondary color codes in the configuration; if both are true then the AT could determine that it is in a border cell.

In an alternate implementation, the access terminal uses a hard coded value for the inner-cell UATI request pilot threshold without receiving the threshold or enablement indication from the base station. Although it would be preferable to transmit the threshold from the base station because it gives the cellular operator flexibility as to inner-cell registration boundaries, a hard coded value in the access terminal would be valuable in systems that do not include the threshold or enablement indications in their configuration messages.

In an alternate implementation, the base station, or other access network station, broadcasts positional information associated with the base station or other physical location. The positional location includes, e.g., latitudinal and longitudinal values and a registration distance value. The positional information broadcast by the base station is detected by the access terminal and stored thereat. And, when the access terminal enters into the coverage area of another base station, the access terminal also detects positional information broadcast by the base station defining the new coverage area. The access terminal, based upon the received positional information, is able to calculate the distance between the current base station and the base station to which it last registered. The access terminal compares the calculated distance with the registration distance broadcast by the base station to which the access terminal last registered. If the calculated distance is greater than the registration distance, the access terminal registers with the base station. Otherwise, the access terminal delays generating a registration message.

That is to say, the registration distance sent by the base station to which the access terminal was last registered defines a paging area. The access network knows to page the access terminal throughout cells within this paging area. When the access terminal moves beyond the paging area, the access terminal is no longer able to be paged. The access terminal again registers, and a new paging area is formed for subsequent paging of the access terminal. In operation of this embodiment of the present invention, an additional distance (the inner cell registration distance) is broadcast by base stations. The additional distance defines an inner paging area of a radial dimension less than the radial dimension of the paging area defined by the registration distance. When the access terminal is positioned between the sub-paging area and the paging area, the access terminal is positioned at a border of the paging area. And, when so-positioned, inner-cell registration is permitted, in manners as described previously when the base station defining the cell in which the access terminal is positioned is inner-cell enabled. The inner cell registration distance broadcast from a base station will be less than the registration distance broadcast by that base station. The access terminal will determine that it is at the border of the paging area if the distance between the base station to which it last registered and the current base station exceeds the inner cell registration distance.

In another alternate implementation, the access terminal is further able to determine whether, or is provided indications, when the cell in which the access terminal is positioned is lightly loaded. In this implementation, the access terminal is also capable of determining its location, such as by GPS data, that the access terminal is positioned in an inner-cell part of the cell. When so-positioned, the access terminal generates a registration message based upon cell loading conditions rather than, e.g., the pilot signal strength of the pilot signal broadcast by the base station. And, in a further implementation, determination of when to generate the registration message is dependent upon a combination of the cell loading conditions and the pilot signal strength.

And, in a further embodiment, the access terminal forms a multimode-capable device capable of operation in a second communication system using a second communication technology, such as a WLAN (Wireless Local Area Network). In this implementation, the access terminal makes its registration using communication mechanisms of the second communication system; the access terminal would trigger the registration based upon determining that it is positioned in an inner-cell part of the cell and by the availability to transmit a message by the second communication technology. And, the network parts of the separate communication systems are interconnected, or otherwise interoperable such that the registration made by way of the second communication system is provided to the first communication system.

Other manners, utilizing other broadcast information, can analogously be utilized by which to delay registration of the access terminal until the access terminal is in desired proximity to the base station.

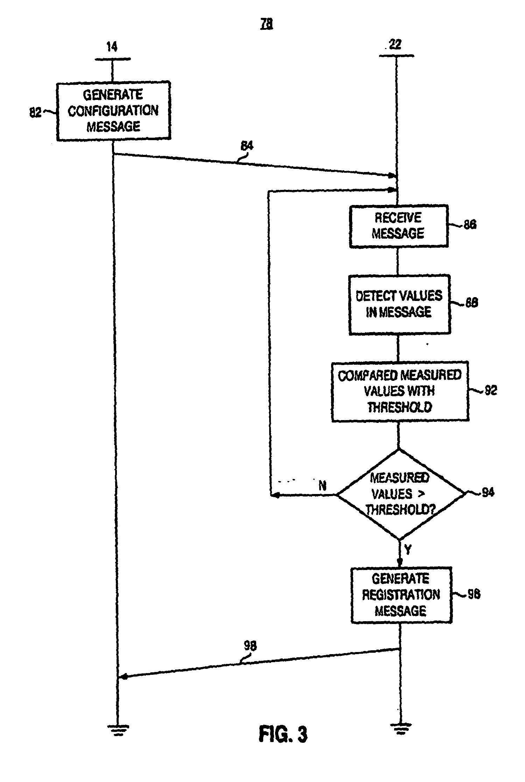

Figure 3 illustrates a message sequence diagram, shown generally at 78, representative of exemplary operation of the communication stations 12 and 22 shown in Figure 2. Here, the base station 12 generates, as indicated by the block 82, a configuration message that includes an inner-cell enablement indication and a value of a minimum pilot signal strength, or other positional indicia value. The message, once generated, is broadcast, here indicated by the segment 84, for detection by an access terminal, here the access terminal 22.

The access terminal receives, indicated by the block 86, the broadcast message, and values of the message, including values of the inner-cell enablement indication and of the selected threshold are detected, as indicated by the block 88. The terminal further, and as indicated by the block 92, compares measured values of the pilot signal, also broadcast by the base station, with the threshold value contained in the configuration message. A determination is made, as indicated by the decision block 94 as to whether the measured value of the pilot signal strength is greater than the selected threshold. If not, the no branch is taken and the procedure continues. If, however, the measured value is at least as great as the threshold value, the yes branch is taken. A registration message is generated, indicated by the block 96, and then sent, indicated by the segment 98, to the base station. Registration of the access terminal with the base station is performed.

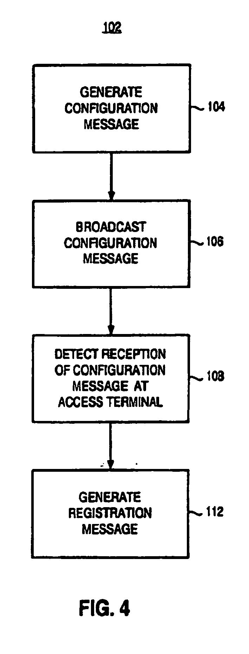

Figure 4 illustrates a method, shown generally at 102, representative of the method of operation of an embodiment of the present invention. The method facilitates registration of an access terminal with an access network.

First, and as indicated by the block 104, a configuration message is generated. The configuration message selectably includes an inner-cell enablement indication. The inner-cell enablement indication is indicative of when a registration request with the access network is permitted. Then, and as indicated by the block 106, the configuration message is broadcast throughout a coverage area of the access network station.

Then, and as indicated by the block 108, reception at the access terminal of the configuration message broadcast thereto is detected. And, as indicated by the block 112, a registration message is generated when the configuration message includes the inner-cell enablement indication and a pilot signal received at the access terminal is beyond a selected threshold.

Thereby, a manner is provided by which to provide for the registration of an access terminal with an access network while also better controlling when a registration message is sent by the access terminal. The registration message need not be sent when the access terminal is positioned at a cell edge, but rather is sent when the access terminal is positioned in a desired position relative to the access network.

The previous descriptions are of preferred examples for implementing the invention, and the scope of the invention should not necessarily be limited by this description.

The scope of the present invention is defined by the following claims.

## Claims

1. A method of registering an access terminal (22), said method comprising:
transmitting from a first base station of an access network to an access-terminal, positional information associated with the first base station, a first registration distance that defines a paging area associated with the first base station and a smaller registration distance that defines an inner paging area associated with the first base station, wherein the access-terminal last registered with the first base station, and wherein the smaller registration distance is less than the first registration distance;
transmitting from a second base station of the access network to the access terminal, positional information associated with the second base station; and
receiving a registration message from the access-terminal (22) at the second base station when the access terminal is positioned at the border of the paging area associated with the first base station determined when a calculated distance between the first base station and the second base station exceeds the smaller registration distance.

2. The method of claim 1 further comprising transmitting to the access-terminal (22) a message, the message indicating that the access-terminal (22) is permitted to perform registrations when the calculated distance exceeds the smaller registration distance.

3. The method of claim 1 wherein the first registration distance and the smaller registration distance comprise broadcast-contained values.

4. Apparatus for registering an access-terminal (22), said apparatus comprising:
a detector configured to detect transmission of positional information associated with a first base station, broadcast by the first base station, positional information associated with a second base station, broadcast by the second base station, a registration distance that defines a paging area associated with the first base station and a smaller registration distance that defines an inner paging area associated with the first base station, wherein the smaller registration distance is less than the registration distance;
a distance calculator configured to calculate a calculated distance from the first base station to the second base station based upon the positional information; and
a registration message generator configured to generate a registration message when the access terminal (22) is positioned at the border of the paging area, determined when the calculated distance exceeds the smaller registration distance.

5. The apparatus of claim 4 wherein said registration message generator is further configured to generate the registration message only when the access-terminal has received a configuration message indicating that the access-terminal is permitted to perform registrations when the calculated distance exceeds the smaller registration distance.

6. A method of registering an access-terminal (22), said method comprising:
receiving positional information associated with a first base station in which the access-terminal last registered, broadcast by the first base station of an access network;
receiving a registration distance from the first base station, the registration distance defining a paging area associated with the first base station;
receiving a smaller registration distance from the first base station, the smaller registration distance defining an inner paging area associated with the first base station, the smaller registration distance is less than the registration distance;
receiving positional information associated with a second base station broadcast by the second base station of the access network;
calculating a calculated distance from the first base station to the second base station based upon positional information; and
sending a registration message when the access terminal (22) is positioned at the border of the paging area, determined when the calculated distance exceeds the smaller registration distance.

7. The method of claim 6 further comprising receiving a message indicating that the access terminal (22) is permitted to perform registration if the calculated distance exceeds the first registration distance.

8. The method of claim 7 wherein said sending is further responsive to receiving the message, the message indicating that the access-terminal (22) is permitted to perform registrations when the calculated distance exceeds the smaller registration distance.

9. Apparatus for registration an access terminal (22), said apparatus comprising:
a registration distance transmitter (28) configured to transmit a first registration distance defining a first paging area of a base station and a second registration distance defining a second paging area of the base station, the second registration distance smaller than the first registration distance; and
a page generator (36) configured to generate an access-terminal page within a paging area defined by one of the first registration distance and the second registration distance.

## Patentansprüche

1. Verfahren zum Registrieren eines Zugangsendgeräts (22), wobei das Verfahren aufweist:
Übertragen, von einer ersten Basisstation eines Zugangsnetzwerks an ein Zugangsendgerät, von Positionsinformation, die zu der ersten Basisstation gehört, einer ersten Registrierungsentfernung, die einen Paging-Bereich definiert, der zu der ersten Basisstation gehört, und einer geringeren Registrierungsentfernung, die einen inneren Paging-Bereich definiert, der zu der ersten Basisstation gehört, wobei sich das Zugangsendgerät zuletzt an der ersten Basisstation registrierte, und wobei die geringere Registrierungsentfernung geringer ist als die erste Registrierungsentfernung;
Übertragen, von einer zweiten Basisstation des Zugangsnetzwerks an das Zugangsendgerät, von Positionsinformation, die zu der zweiten Basisstation gehört; und
Empfangen einer Registrierungsnachricht von dem Zugangsendgerät (22) an der zweiten Basisstation, wenn sich das Zugangsendgerät an der Grenze des Paging-Bereichs befindet, der zu der ersten Basisstation gehört, der bestimmt wird, wenn eine berechnete Entfernung zwischen der ersten Basisstation und der zweiten Basisstation die geringere Registrierungsentfernung übersteigt.

2. Verfahren gemäß Anspruch 1, das weiter aufweist Übertragen einer Nachricht an das Zugangsendgerät (22), wobei die Nachricht anzeigt, dass das Zugangsendgerät (22) Registrierungen durchführen darf, wenn die berechnete Entfernung die geringere Registrierungsentfernung übersteigt.

3. Verfahren gemäß Anspruch 1, wobei die erste Registrierungsentfernung und die geringere Registrierungsentfernung Broadcast-enthaltene Werte aufweisen.

4. Vorrichtung zum Registrieren eines Zugangsendgeräts (22), wobei die Vorrichtung aufweist:
einen Detektor, der konfiguriert ist, eine Übertragung von Positionsinformation zu erfassen, die zu einer ersten Basisstation gehört, gesendet (broadcast) von der ersten Basisstation, von Positionsinformation, die zu einer zweiten Basisstation gehört, gesendet von der zweiten Basisstation, einer Registrierungsentfernung, die einen Paging-Bereich definiert, der zu der ersten Basisstation gehört, und einer geringeren Registrierungsentfernung, die einen inneren Paging-Bereich definiert, der zu der ersten Basisstation gehört, wobei die geringere Registrierungsentfernung geringer ist als die Registrierungsentfernung;
einen Entfernungsberechner, der konfiguriert ist, eine berechnete Entfernung von der ersten Basisstation zu der zweiten Basisstation basierend auf der Positionsinformation zu berechnen; und
einen Registrierungsnachricht-Generator, der konfiguriert ist, eine Registrierungsnachricht zu erzeugen, wenn sich das Zugangsendgerät (22) an der Grenze des Paging-Bereichs befindet, der bestimmt wird, wenn die berechnete Entfernung die geringere Registrierungsentfernung übersteigt.

5. Vorrichtung gemäß Anspruch 4, wobei der Registrierungsnachricht-Generator weiter konfiguriert ist, die Registrierungsnachricht nur zu erzeugen, wenn das Zugangsendgerät eine Konfigurationsnachricht empfangen hat, die anzeigt, dass das Zugangsendgerät Registrierungen durchführen darf, wenn die berechnete Entfernung die geringere Registrierungsentfernung übersteigt.

6. Verfahren zum Registrieren eines Zugangsendgeräts (22), wobei das Verfahren aufweist:
Empfangen von Positionsinformation, die zu einer ersten Basisstation gehört, an der das Zugangsendgerät als letztes registriert war, gesendet von der ersten Basisstation eines Zugangsnetzwerks;
Empfangen einer Registrierungsentfernung von der ersten Basisstation, wobei die Registrierungsentfernung einen Paging-Bereich definiert, der zu der ersten Basisstation gehört;
Empfangen einer geringeren Registrierungsentfernung von der ersten Basisstation, wobei die geringere Registrierungsentfernung einen inneren Paging-Bereich definiert, der zu der ersten Basisstation gehört, wobei die geringere Registrierungsentfernung geringer ist als die Registrierungsentfernung;
Empfangen von Positionsinformation, die zu einer zweiten Basisstation gehört, gesendet von der zweiten Basisstation des Zugangsnetzwerks;
Berechnen einer berechneten Entfernung von der ersten Basisstation zu der zweiten Basisstation basierend auf Positionsinformation; und
Senden einer Registrierungsnachricht, wenn sich das Zugangsendgerät (22) an der Grenze des Paging-Bereichs befindet, der bestimmt wird, wenn die berechnete Entfernung die geringere Registrierungsentfernung übersteigt.

7. Verfahren gemäß Anspruch 6, das weiter aufweist Empfangen einer Nachricht, die anzeigt, dass das Zugangsendgerät (22) eine Registrierung durchführen darf, wenn die berechnete Entfernung die erste Registrierungsentfernung übersteigt.

8. Verfahren gemäß Anspruch 7, wobei das Senden weiter in Reaktion auf ein Empfangen der Nachricht erfolgt, wobei die Nachricht anzeigt, dass das Zugangsendgerät (22) Registrierungen durchführen darf, wenn die berechnete Entfernung die geringere Registrierungsentfernung übersteigt.

9. Vorrichtung zum Registrieren eines Zugangsendgeräts (22), wobei die Vorrichtung aufweist:
einen Registrierungsentfernungs-Sender (28), der konfiguriert ist, eine erste Registrierungsentfernung zu übertragen, die einen ersten Paging-Bereich einer Basisstation definiert, und eine zweite Registrierungsentfernung, die einen zweiten Paging-Bereich der Basisstation definiert, wobei die zweite Registrierungsentfernung geringer ist als die erste Registrierungsentfernung; und
einen Page-Generator (36), der konfiguriert ist, einen Zugangsendgerät-Page in einem Paging-Bereich zu erzeugen, der durch eine der ersten Registrierungsentfernung und der zweiten Registrierungsentfernung definiert ist.

## Revendications

1. Procédé d'enregistrement d'un terminal d'accès (22), ledit procédé comprenant :
la transmission à un terminal d'accès (22), par une dernière station de base enregistrée d'un réseau d'accès, d'une information de position associée à la dernière station de base enregistrée, d'une première distance d'enregistrement qui définit une zone de recherche associée à la dernière station de base enregistrée et d'une distance d'enregistrement plus petite qui définit une zone de recherche interne associée à la dernière station de base enregistrée, dans lequel la distance d'enregistrement plus petite est inférieure à la première distance d'enregistrement ;
la transmission au terminal d'accès, par une deuxième station de base du réseau d'accès, d'une information de position associée à la deuxième station de base ; et
la réception, à la deuxième station de base, d'un message d'enregistrement provenant du terminal d'accès (22) lorsque le terminal d'accès est placé à la bordure de la zone de recherche associée à la dernière station de base enregistrée déterminée lorsque la distance calculée entre la dernière station de base enregistrée et la deuxième station de base excède la distance d'enregistrement plus petite.

2. Procédé selon la revendication 1, comprenant en outre la transmission d'un message au terminal d'accès (22), le message indiquant que le terminal d'accès (22) est autorisé à effectuer des enregistrements lorsque la distance calculée excède la distance d'enregistrement plus petite.

3. Procédé selon la revendication 1, dans lequel la première distance d'enregistrement et la distance d'enregistrement plus petite comprennent des valeurs contenues dans la diffusion.

4. Dispositif destiné à enregistrer un terminal d'accès (22), ledit dispositif comprenant :
un détecteur constitué pour détecter la transmission d'une information de position associée à une dernière station de base enregistrée, diffusée par la dernière station de base enregistrée, d'une information de position associée à une deuxième station de base, diffusée par la deuxième station de base, d'une distance d'enregistrement qui définit une zone de recherche associée à la dernière station de base enregistrée et d'une distance d'enregistrement plus petite qui définit une zone de recherche interne associée à la dernière station de base enregistrée, dans lequel la distance d'enregistrement plus petite est inférieure à la distance d'enregistrement ;
un calculateur de distance constitué pour calculer, en se basant sur l'information de position, une distance calculée de la dernière station de base enregistrée à la deuxième station de base ; et
un générateur de message d'enregistrement constitué pour engendrer un message d'enregistrement lorsque le terminal d'accès (22) est placé à la bordure de la zone de recherche, déterminée lorsque la distance calculée excède la distance d'enregistrement plus petite.

5. Dispositif selon la revendication 4, dans lequel ledit générateur de message d'enregistrement est en outre constitué pour engendrer le message d'enregistrement seulement lorsque le terminal d'accès a reçu un message de configuration indiquant que le terminal d'accès est autorisé à effectuer des enregistrements lorsque la distance calculée excède la distance d'enregistrement plus petite.

6. Procédé d'enregistrement d'un terminal d'accès (22) ledit procédé comprenant :
la réception d'une information de position associée à une dernière station de base enregistrée, diffusée par la dernière station de base enregistrée d'un réseau d'accès ;
la réception d'une distance d'enregistrement de la dernière station de base enregistrée, la distance d'enregistrement définissant une zone de recherche associée à la dernière station de base enregistrée ;
la réception d'une distance d'enregistrement plus petite de la dernière station de base enregistrée, la distance d'enregistrement plus petite définissant une zone de recherche interne associée à la dernière station de base enregistrée, la distance d'enregistrement plus petite étant inférieure à la distance d'enregistrement ;
la réception d'une information de position associée à une deuxième station de base, diffusée par la deuxième station de base du réseau d'accès ;
le calcul, en se basant sur l'information de position, d'une distance calculée de la dernière station de base enregistrée à la deuxième station de base ; et
l'envoi d'un message d'enregistrement lorsque le terminal d'accès (22) est placé à la bordure de la zone de recherche, déterminée lorsque la distance calculée excède la distance d'enregistrement plus petite.

7. Procédé selon la revendication 6, comprenant en outre la réception d'un message indiquant que le terminal d'accès (22) est autorisé à effectuer l'enregistrement si la distance calculée excède la première distance d'enregistrement.

8. Procédé selon la revendication 7, dans lequel ledit envoi répond en outre à la réception du message, le message indiquant que le terminal d'accès (22) est autorisé à effectuer des enregistrements lorsque la distance calculée excède la distance d'enregistrement plus petite.

9. Dispositif de recherche d'un terminal d'accès (22), le dispositif comprenant :
un émetteur (28) de distances d'enregistrement constitué pour émettre une première distance d'enregistrement définissant une première zone de recherche d'une station de base et une seconde distance d'enregistrement définissant une seconde zone de recherche de la station de base, la seconde distance d'enregistrement étant plus petite que la première distance d'enregistrement ; et
un générateur (36) de recherche constitué pour engendrer une recherche de terminal d'accès à l'intérieur d'une zone de recherche définie par l'une de la première distance d'enregistrement et de la seconde distance d'enregistrement.
